# EUROPEAN PATENT SPECIFICATION

(11) **EP 2 310 237 B1**
(45) Date of publication and mention of the grant of the patent: **19.09.2012**
(21) Application number: 09772991.7
(22) Date of filing: 30.06.2009
(51) Int. Cl.: B60T 7/06

(54) **PEDAL UNIT STRUCTURE FOR MOTOR VEHICLES**
PEDALEINHEITSSTRUKTUR FÜR KRAFTFAHRZEUGE
STRUCTURE D'UNITÉ DE PÉDALE POUR VÉHICULES À MOTEUR

(30) Priority: 03.07.2008 IT TO20080516
(43) Date of publication of application: 20.04.2011
(73) Proprietor: KNORR-BREMSE SISTEMI PER AUTOVEICOLI COMMERCIALI S.P.A., 20043 Arcore (Milano) (IT)
(72) Inventor: BATTISTELLA, Denis, I-20037 Paderno Dugnano (Milano) (IT)
(74) Representative: Quinterno, Giuseppe
(86) International application number: PCT/IB2009/052823
(87) International publication number: WO 2010/001331

(56) References cited:
- DE-A1- 10 306 646
- DE-A1- 10 336 799
- DE-A1-102005 024 486
- DE-A1-102006 010 853

## Description

The present invention relates to a pedal unit structure for motor vehicles of the kind defined in the preamble of claim 1.

A pedal unit structure of that kind is disclosed in DE 10 2005 024 486 A1.

An object of the present invention is to provide a pedal unit structure for motor vehicles of the above-defined type, which can be manufactured in a simple and cost-effective manner, and particularly does not require subsequent material removing processing to bring the apertures or seats of said support projections to the foreseen nominal size.

This and other objects are achieved according to the invention by a pedal unit structure according to claim 1.

In a pedal unit structure according to the invention the apertures or seats for the shaft can be thus provided in the projections of the die-cast metal body in a not particularly accurate manner, because apertures or seats having the desired nominal cross size are made (in an easy manner, for example by means of moulding) in said plastic material formations.

Further characteristics and advantages of the invention will appear from the detailed description below, which is merely given by way of a non-limiting example, with reference to the annexed drawings, in which:
Fig. 1 is a perspective view of a pedal unit structure for motor vehicles according to the present invention;
Fig. 2 is a perspective view of a body made of a pressure die-cast metal material comprised within the pedal unit structure in Fig. 1;
Fig. 3 and 4 are perspective views showing the shape, in an enlarged scale, of plastic material formations being applied on the support projections of the die-cast body in Fig. 2;
Fig. 5 is a partial perspective view showing, from another point of view, the pedal unit structure according to Fig. 1;
Fig. 6 is a perspective view of a shaft comprised within the pedal unit structure according to the above figures; and
Fig. 7 is a partially cut-away, partial view which shows an embodiment of the end portions of the shaft of the pedal unit structure, and the coupling of the latter to the corresponding support projections of the pressure die-cast body and the plastic material formations associated therewith.

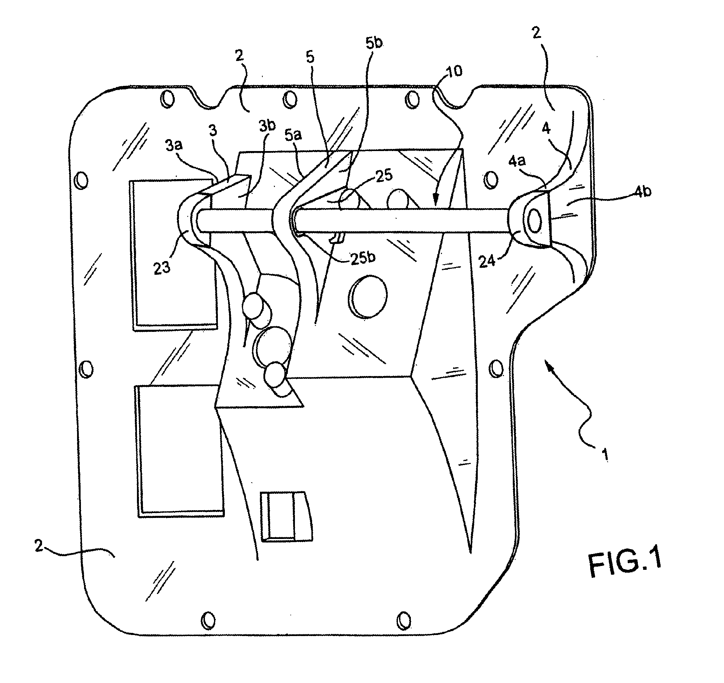

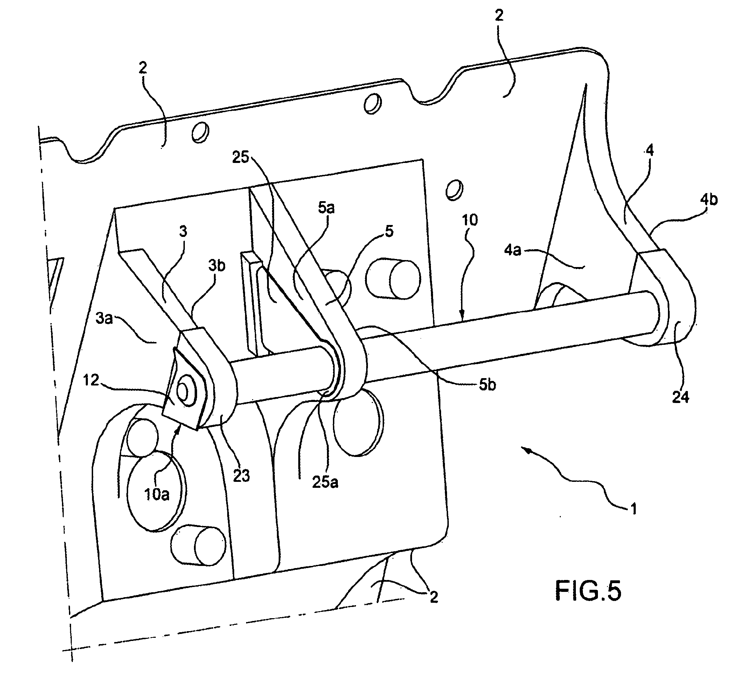

In Fig. 1 and 5, a pedal unit structure for motor vehicles according to the present invention is generally designated 1.

The pedal unit structure 1 comprises a body 2 made of a pressure die-cast metal material, particularly pressure die-cast aluminum.

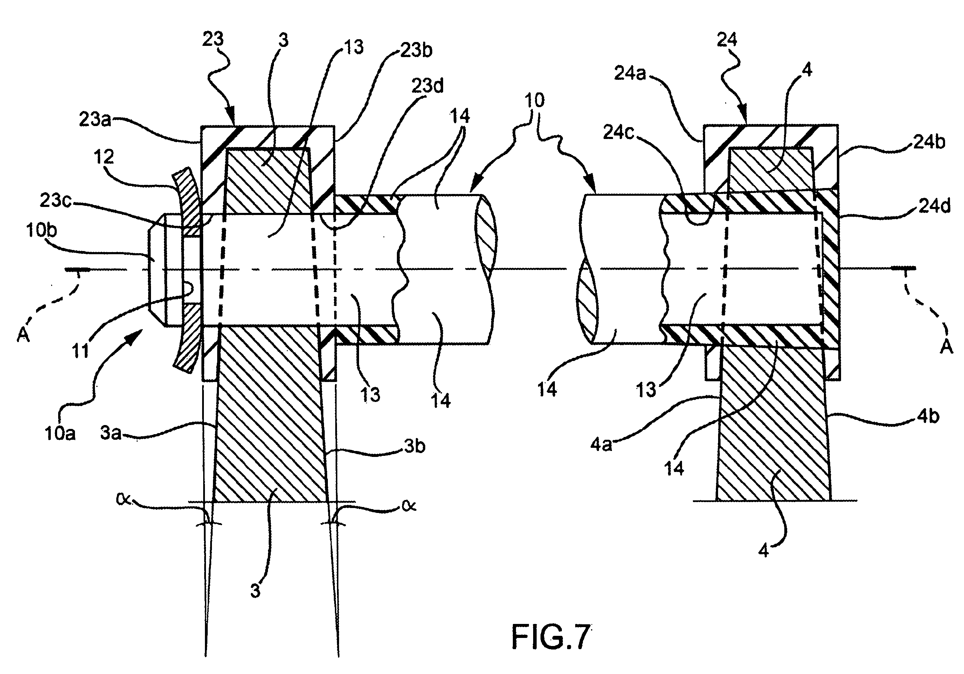

In a manner known per se, the body 2 is made with two end support projections 3 and 4, and with an intermediate projection 5. These projections have a generally flattened shape, with a respective pair of main surfaces or faces 3a and 3b, 4a and 4b, 5a and 5b converging to each other away from the pressure die-cast body 2, according to a respective inclination angle suitable to allow an easy delivery (removal from the mould) thereof following pressure die casting. The angle of inclination of the main surfaces or faces of the support projection 3 is designated with a in Fig. 7.

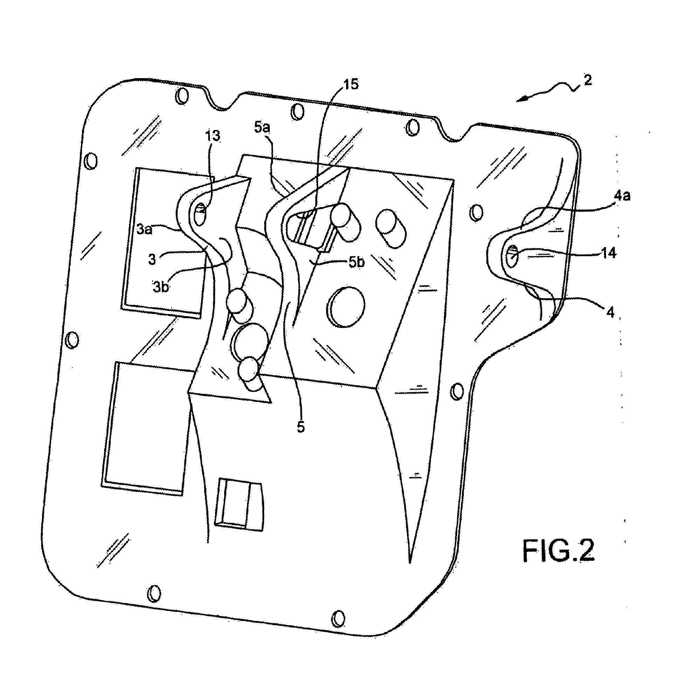

With reference to Fig. 2, respective apertures or seats, designated 13, 14 and 15, which are essentially aligned with each other, are arranged in the support projections 3, 4 and 5 of the pressure die-cast metal body 2.

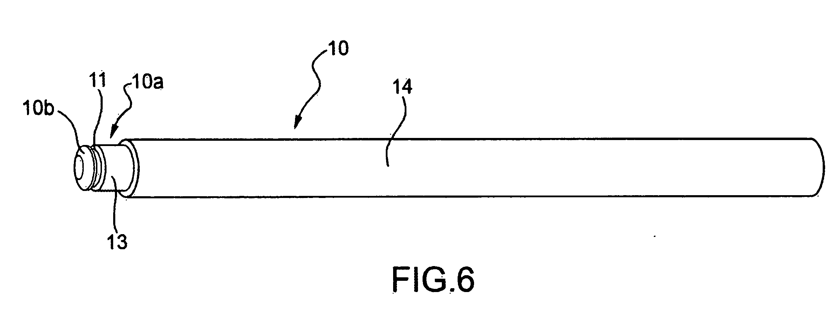

As will be better appreciated below, a pedal carrying shaft which is generally designated 10 in Fig. 1, 5, 6 and 7 is intended to be assembled within these apertures.

The apertures 13 and 14 of the end projections 3 and 4 are made during the pressure die-casting with a cross-sectional size which is slightly greater than that of the corresponding portions of the shaft 10. The aperture 15 of the intermediate projection 5 is made widely greater than the cross section of the shaft 10.

With reference to Fig. 1 and 5, respective plastic material formations, designated 23, 24 and 25 are assembled or applied to the projections 3, 4 and 5 of the pressure die-cast metal body 2.

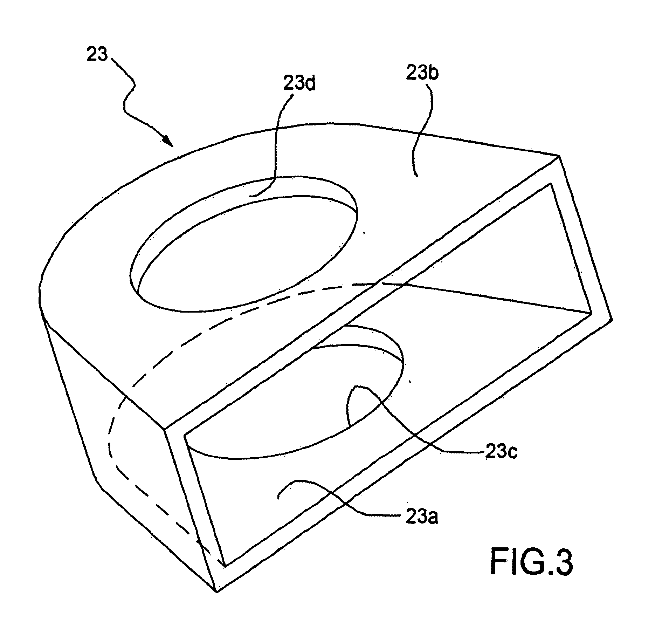

The formations 23 and 24, applied to the end projections 3 and 4, have similar configurations, essentially in the form of a box-like cap. One of these formations, 23, is illustrated in Fig. 3. Each of these box-like cap formations has two main walls 23a, 23b and 24a, 24b (see also Fig. 7) facing each other wherein respective co-axially aligned apertures or seats 23c, 23d and 24c, 24d are respectively provided.

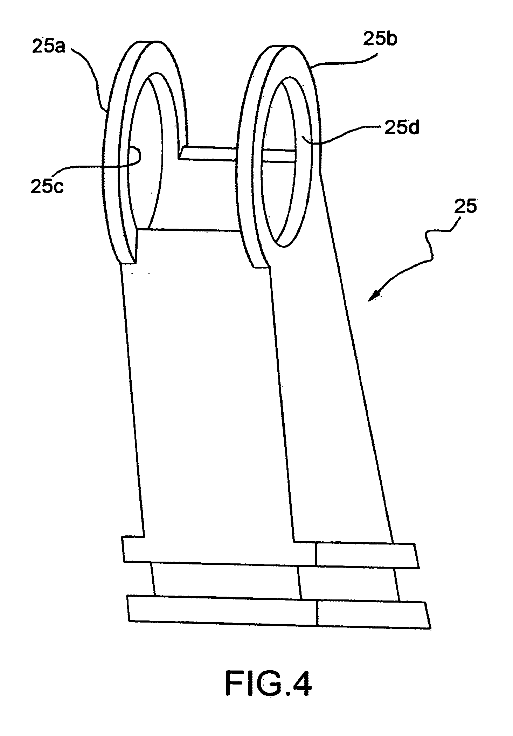

In the exemplary embodiment illustrated herein, a formation 25 of molded plastic material, having the shape best seen in Fig. 4 and 5, is associated with the aperture 15 (Fig. 2) of the intermediate projection 5 of the pressure die-cast metal body 2.

The aperture 15 of this projection 5 is quite extended, and the shaft 10 would be susceptible of extending therethrough with wide clearance. The corresponding formation 25 of plastic material is suitable to close said aperture 15, and has two essentially parallel end appendixes 25a, 25b, in which respective aligned apertures 25c, 25d are provided.

The apertures or seats 23c and 23d, 24c and 24d, 25c and 25d are provided such that they have a cross-sectional size corresponding to the cross-sectional size of the corresponding portions of the pedal carrying shaft 10.

The formations 23, 24 and 25 of plastic material are conveniently provided such that the respective planar surfaces 23a and 23b, 24a and 24b, 25b laterally project outwardly relative to the main surfaces or faces 3a and 3b, 4a and 4b, 5a and 5b of the corresponding projections 3, 4 and 5 of the pressure die-cast metal body 2.

Furthermore, as may be particularly appreciated in Fig. 7, the planar side surfaces 23a and 23b, 24a and 24b, 25a and 25b are conveniently parallel to each other, and orthogonal to the axis A-A of the pedal carrying shaft 10.

With reference to Fig. 5 and 7, the shaft 10 has a first end portion 10a projecting beyond the corresponding projection 3 of the pressure die-cast body 2 and the overmoulded formation 23 associated therewith. This portion 10a of the shaft 10 has a peripheral groove 11 (Fig. 7), defining an end head 10b adjacent thereto. A locking elastic member 12, acting against the adjacent planar surface 23a of the formation 23 that is applied to the support projection 3, is engaged within this groove.

With reference to Fig. 7, the shaft 10 can be conveniently provided with a cylindrical metal core 13, provided with a coating 14 of overmoulded plastic material.

The end of the shaft 10 opposite the head 10b conveniently has for example a truncated-cone shape converging to said head, as may be seen at the right in Fig. 7. The plastic material formation 24 applied to the support projection 4 correspondingly defines an aperture or seat having a truncated-cone shape substantially matching the one of this shaft end.

With reference to the left side in Fig. 7, the end portion of the shaft 10 which is engaged through the support projection 3 and the formation 23 associated therewith is not provided with the coating 14. This coating thus provides a kind of stop step or shoulder at the planar surface or face 3b of the formation 23.

Due to the above-described characteristics, the formations 23, 24 and 25 define parallel planar side surfaces, suitable to operate as side containment shoulders for the pedals (not shown) assembled to the shaft 10, thereby limiting the rubbing wear thereof.

As stated above, the pedal unit structure 1 according to the present invention allows avoiding any operation of mechanical material removing processing following the pressure die-casting of the metal body 2. The provision of the plastic material formations 23, 24 and 25 is very easy, and allows defining the cross size of the seats thereof with high precision, which are intended to support corresponding end and intermediate portions of the pedal carrying shaft 10.

Of course, the principle of the invention remaining unchanged, the embodiments and constructional details may be widely changed relative to what has been described and illustrated herein merely by way of non-limiting example, without however departing from the scope of the invention as defined in the annexed claims.

## Claims

1. A pedal unit structure (1) for motor vehicles, comprising:
a body (2) of pressure die-cast metal material, particularly pressure die-cast aluminum, formed with
first and second end support projections (3, 4) in which respective essentially aligned apertures or seats (13, 14) are arranged to receive corresponding ends of a pedal carrying shaft (10), and
wherein said apertures or seats (13, 14, 15) are made with a greater cross-sectional size than that of the corresponding portions of the pedal carrying shaft (10), and in that respective plastic material formations (23, 24, 25), defining respective apertures or seats (23c, 23d; 24c, 24d; 25c, 25d) having a nominal cross-sectional size corresponding to the cross size of the corresponding portions of the pedal carrying shaft (10) are applied to said projections (3, 4, 5);
the structure (1) being **characterized in that** it also comprises an intermediate projection (5) having a respective aperture (15), for a corresponding intermediate portion of said shaft (10), and **in that** the plastic material formations (23, 24) applied to the end projections (3, 4) of the pressure die-cast metal body (2) substantially have a box-like cap configuration, with two walls (23a, 23b; 24a, 24b) facing each other in which respective co-axially aligned apertures or seats (23c, 23d; 24c, 24d) are provided.

2. The pedal unit structure according to claim 1, wherein said projections (3, 4, 5) of the pressure die-cast metal body (2) have a general flattened shape, with a respective pair of main surfaces or faces (3a, 3b; 4a, 4b; 5a, 5b) which are almost orthogonal to the longitudinal axis (A-A) of the pedal carrying shaft (10); said main surfaces or faces (3a, 3b; 4a, 4b; 5a, 5b) being convergent to each other away from the pressure die-cast body (2) according to a respective inclination angle (α) suitable to allow an easy delivery thereof following pressure die-casting, and wherein the plastic material formations (23, 24, 25) associated therewith define respective planar surfaces (23a, 23b; 24a, 24b; 25a, 25b) orthogonal to the axis (A-A) of the pedal carrying shaft (10), outwardly projecting relative to the main surfaces or faces (3a, 3b; 4a, 4b; 5a, 5b) of the corresponding projections (3, 4, 5) of the pressure die-cast body (2).

3. The pedal unit structure according to claim 1 or 2, wherein a first end portion (10a) of the pedal carrying shaft (10), projecting beyond the corresponding projection (3) of the pressure die-cast body (2) and the plastic material formation (23) associated therewith, has a peripheral groove (11) defining an end head (10b) adjacent thereto; a retaining and locking elastic member (12) acting against the adjacent planar surface (23a) of said formation (23) being engageable in said groove (11).

4. The pedal unit structure according to claim 3, wherein the other or second end portion of the shaft (10) has a truncated-cone configuration converging to said first end portion (10a), and wherein the plastic material formation (24) applied to the corresponding end projection (4) of the pressure die-cast body (2) has a truncated-cone shaped aperture or seat substantially complementary to that of said other or second end of the pedal carrying shaft (10).

5. The pedal unit structure according to any preceding claim, wherein the intermediate projection (5) has an extended aperture (25), wherein the pedal carrying shaft (10) is susceptible of extending with wide clearance, and the corresponding plastic material formation (25) is such as to sealingly close said aperture (15) and has two essentially parallel end appendixes (25a, 25b), wherein respective aligned apertures (25c, 25d) are provided, in which the corresponding intermediate portion of the pedal carrying shaft (10) is susceptible to be extended substantially without clearance.

6. The pedal unit structure according to any preceding claim, wherein the pedal carrying shaft (10) has a metal core (13) provided with an overmoulded plastic material coating (14).

7. The pedal unit structure according to claim 3 and 6, wherein said first end portion (10a) of the pedal carrying shaft (10) is not provided with said coating (14).

## Patentansprüche

1. Pedaleinheitsstruktur (1) für Kraftfahrzeuge, beinhaltend:
einen Körper (2) aus druckgegossenem Metallmaterial, insbesondere druckgegossenem Aluminium, ausgebildet mit
ersten und zweiten endseitigen Stützvorsprüngen (3, 4), in denen jeweils im Wesentlichen aufeinander ausgerichtete Öffnungen oder Sitze (13, 14) angeordnet sind, um korrespondierende Enden eines Pedalträgerschafts (10) aufzunehmen, und
wobei die Öffnungen oder Sitze (13, 14, 15) mit einer größeren Querschnittsabmessung hergestellt sind, als diejenigen der korrespondierenden Abschnitte des Pedalträgerschafts (10), und wobei entsprechende Plastikmaterialausformungen (23, 24, 25), die entsprechende Öffnungen oder Sitze (23c, 23d; 24c, 24d; 25c, 25d) definieren, eine nominelle Querschnittsabmessung aufweisen, die mit dem Querschnitt der korrespondierenden Abschnitte des Pedalträgerschafts (10) korrespondieren, die mit den Vorsprüngen (3, 4, 5) verbunden sind;
der Struktur (1), die **dadurch gekennzeichnet ist, dass** sie außerdem einen intermediären Vorsprung (5) beinhaltet, der eine entsprechende Öffnung (15) für einen entsprechenden intermediären Abschnitt des Schafts (10) aufweist, und dass die an den endseitigen Vorsprüngen (3, 4) des druckgegossenen Metallkörpers (2) angebrachten Kunststoffmaterialausformungen (23, 24) im Wesentlichen eine Bauform einer boxähnlichen Kappe aufweisen, wobei zwei Wände (23a, 23b; 24a, 24b) sich gegenüberliegen, in denen entsprechende koaxial aufeinander ausgerichtete Öffnungen oder Sitze (23c, 23d; 24c, 24d) vorgesehen sind.

2. Pedaleinheitsstruktur nach Anspruch 1, wobei die Vorsprünge (3, 4, 5) des druckgegossenen Metallkörpers (2) eine im Wesentlichen abgeflachte Form aufweisen mit einem jeweiligen Paar Hauptoberflächen oder Seitenflächen (3a, 3b; 4a, 4b; 5a, 5b), die im Wesentlichen nahezu orthogonal zu der longitudinalen Achse (A-A) des Pedalträgerschafts (10) ausgerichtet sind; die Hauptoberflächen oder Seitenflächen (3a, 3b; 4a, 4b; 5a, 5b) konvergent zueinander weg vom druckgegossenen Körper (2) zeigen gemäß einem jeweiligen Neigungswinkel (α), der geeignet ist für eine einfache Herstellung desselben auf das Druckgießen folgend, und wobei die damit zusammenhängenden Plastikmaterialausformungen (23, 24, 25) entsprechende ebene Oberflächen (23a, 23b; 24a, 24b; 25a, 25b) definieren, die orthogonal sind zur Achse (A-A) des Pedalträgerschafts (10), sich nach außen relativ zu den Hauptoberflächen oder Seitenflächen (3a, 3b; 4a, 4b; 5a, 5b) der korrespondierenden Vorsprünge (3, 4, 5) des druckgegossenen Körpers (2) erstreckend.

3. Pedaleinheitsstruktur nach Anspruch 1 oder 2, wobei ein erster endseitiger Abschnitt (10a) des Pedalträgerschafts (10) über den entsprechenden Vorsprung (3) des druckgegossenen Körpers (2) hinausragt und die damit assoziierte Plastikmaterialausformung (23) eine periphere Vertiefung (11) aufweist, die einen daran angrenzenden endseitigen Kopf (10b) definiert; wobei ein elastisches Zurückhaltungs - und Verriegelungsbauteil (12) gegen die angrenzende ebene Oberfläche (23a) der genannten Ausformung (23) einwirkt, welche mit der genannten Vertiefung (11) in Eingriff bringbar ist.

4. Pedaleinheitsstruktur nach Anspruch 3, wobei der andere oder zweite endseitige Abschnitt des Schafts (10) eine Bauform eines Kegelstumpfes, die zu einem ersten endseitigen Abschnitt (10a) konvergiert, und wobei die dem korrespondierenden endseitigen Vorsprung (4) des druckgegossenen Körpers (2) applizierte Plastikmaterialausformung (24) eine kegelstumpfförmige Öffnung oder einen kegelstumpfförmigen Sitz aufweist, die beziehungsweise der im Wesentlichen komplementär zu demjenigen anderen oder zweiten Ende des Pedalträgerschafts (10) ist.

5. Pedaleinheitsstruktur nach einem vorhergehenden Anspruch, wobei der intermediäre Vorsprung (5) eine erweiterte Öffnung (25) aufweist, wobei der Pedalträgerschaft (10) bereit zum Ausziehen in einem großen Bereich ist, und die korrespondierende Plastikmaterialausformung (25) zum dichtenden Verschließen der Apertur (15) ausgebildet ist und zwei im Wesentlichen parallele endseitige Fortsätze (25a, 25b) aufweist, wobei entsprechende ausgerichtete Öffnungen (25c, 25d) vorgesehen sind, in denen der korrespondierende intermediäre Abschnitt des Pedalträgerschafts (10) dazu vorgesehen ist, im Wesentlichen ohne Abstand ausgefahren zu werden.

6. Pedaleinheitsstruktur nach einem vorhergehenden Anspruch, wobei der Pedalträgerschaft (10) einen metallischen Kern (13) aufweist, der mit einer angegossenen Plastikmaterialbeschichtung (14) ausgestattet ist.

7. Pedaleinheitsstruktur nach Anspruch 3 und 6, wobei der erste endseitige Abschnitt (10a) des Pedalträgerschafts (10) nicht mit der genannten Beschichtung (14) ausgestattet ist.

## Revendications

1. Structure d'unité de pédale (1) pour véhicules motorisés, comprenant :
un corps (2) de matériau métallique coulé sous pression, particulièrement d'aluminium coulé sous pression, formé avec
des première et seconde saillies de support d'extrémité (3, 4) dans lesquelles des ouvertures ou portées essentiellement alignées respectives (13, 14) sont agencées pour recevoir des extrémités correspondantes d'une tige de support de pédale (10), et
dans laquelle lesdites ouvertures ou portées (13, 14, 15) sont réalisées avec une dimension de section transversale supérieure à celle des parties correspondantes de la tige de support de pédale (10), et des formations de matériau plastique respectives (23, 24, 25), définissant des ouvertures ou portées respectives (23c, 23d ; 24c, 24d ; 25c, 25d) possédant une dimension de section transversale nominale correspondant à la dimension transversale des parties correspondantes de la tige de support de pédale (10) sont appliquées sur lesdites saillies (3, 4, 5) ;
la structure (1) étant **caractérisée en ce qu'**elle comprend également une saillie intermédiaire (5) possédant une ouverture respective (15), pour une partie intermédiaire correspondante de ladite tige (10), et **en ce que** les formations de matériau plastique (23, 24) appliquées sur les saillies d'extrémité (3, 4) du corps métallique coulé sous pression (2) possèdent sensiblement une configuration de coiffe en forme de boîte, avec deux parois (23a, 23b ; 24a, 24b) se faisant face dans lesquelles des ouvertures ou portées respectives alignées de façon coaxiale (23c, 23d ; 24c, 24d) sont prévues.

2. Structure d'unité de pédale selon la revendication 1, dans laquelle lesdites saillies (3, 4, 5) du corps métallique coulé sous pression (2) présentent une forme aplatie générale, avec une paire respective de surfaces ou faces principales (3a, 3b ; 4a, 4b ; 5a, 5b) qui sont presque orthogonales à l'axe longitudinal (A-A) de la tige de support de pédale (10) ; lesdites surfaces ou faces principales (3a, 3b ; 4a, 4b ; 5a, 5b) étant convergentes l'une par rapport à l'autre en s'éloignant du corps coulé sous pression (2) selon un angle d'inclinaison respectif (α) approprié pour permettre une libération facile de celles-ci suivant le coulage sous pression, et dans laquelle les formations de matériau plastique (23, 24, 25) associées à celles-ci définissent des surfaces planes respectives (23a, 23b ; 24a, 24b ; 25a, 25b) orthogonales à l'axe (A-A) de la tige de support de pédale (10), faisant saillie vers l'extérieur par rapport aux surfaces ou faces principales (3a, 3b ; 4a, 4b ; 5a, 5b) des saillies correspondantes (3, 4, 5) du corps coulé sous pression (2).

3. Structure d'unité de pédale selon la revendication 1 ou 2, dans laquelle une première partie d'extrémité (10a) de la tige de support de pédale (10), faisant saillie au-delà de la saillie correspondante (3) du corps coulé sous pression (2) et la formation de matériau plastique (23) associée à celle-ci, comporte une rainure périphérique (11) définissant une tête d'extrémité (10b) adjacente à celle-ci ; un élément élastique de retenue et de verrouillage (12) agissant contre la surface plane adjacente (23a) de ladite formation (23) pouvant s'engager dans ladite rainure (11).

4. Structure d'unité de pédale selon la revendication 3, dans laquelle la seconde, ou autre, partie d'extrémité de la tige (10) comporte une configuration conique tronquée convergeant par rapport à ladite première partie d'extrémité (10a), et dans laquelle la formation de matériau plastique (24) appliquée sur la saillie d'extrémité correspondante (4) du corps coulé sous pression (2) comporte une ouverture ou portée en forme de cône tronqué sensiblement complémentaire à celle de ladite seconde, ou autre, extrémité de la tige de support de pédale (10).

5. Structure d'unité de pédale selon une quelconque revendication précédente, dans laquelle la saillie intermédiaire (5) comporte une ouverture étendue (25), dans laquelle la tige de support de pédale (10) est susceptible de s'étendre avec un jeu large, et la formation de matériau plastique correspondante (25) est telle à fermer ladite ouverture (15) de façon étanche et comporte deux appendices d'extrémité essentiellement parallèles (25a, 25b), dans lesquels des ouvertures alignées respectives (25c, 25d) sont prévues, dans lesquelles la partie intermédiaire correspondante de la tige de support de pédale (10) est susceptible d'être étendue sensiblement sans jeu.

6. Structure d'unité de pédale selon une quelconque revendication précédente, dans laquelle la tige de support de pédale (10) comporte une âme métallique (13) pourvue d'un revêtement de matériau plastique surmoulé (14).

7. Structure d'unité de pédale selon la revendication 3 et 6, dans laquelle ladite première partie d'extrémité (10a) de la tige de support de pédale (10) n'est pas pourvue dudit revêtement (14).
